Europäisches Patentamt

European Patent Office

Office européen des brevets

(19)

(11) Numéro de publication: **0 021 957**
**B1**

(12) **FASCICULE DE BREVET EUROPEEN**

(45) Date de publication du fascicule du brevet:
**20.07.83**

(51) Int. Cl.³: **F 16 K 31/60,** F 16 K 1/52

(21) Numéro de dépôt: **80400851.4**

(22) Date de dépôt: **12.06.80**

(54) Robinet mélangeur à fermeture temporisée.

(30) Priorité: **26.06.79 FR 7916360**

(43) Date de publication de la demande:
**07.01.81 Bulletin 81/1**

(45) Mention de la délivrance du brevet:
**20.07.83 Bulletin 83/29**

(84) Etats contractants désignés:
**AT BE CH DE GB IT LI LU NL SE**

(56) Documents cités:

**DE-A-2 301 883**
**DE-B-1 258 688**
**FR-A-2 269 666**
**US-A-3 559 684**
**US-A-3 921 659**
**US-A-4 089 347**

(73) Titulaire: **LES ROBINETS PRESTO Société anonyme
dite:, 7, rue Racine, F-92120 Montrouge (FR)**

(72) Inventeur: **Patient, Lucien, 7, rue Racine,
F-92 Montrouge (FR)**

(74) Mandataire: **Vander-Heym, Roger, 172 Boulevard
Voltaire, F-75011 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Robinet mélangeur à fermeture temporisée

La présente invention est relative à des robinets mélangeurs et notamment à ceux pourvus d'un dispositif de temporisation.

On sait que l'usager peut manoeuvrer le boisseau du mélangeur pour obturer totalement ou partiellement les arrivées d'eau froide et d'eau chaude afin d'amener le mélange à la température désirée. Si l'eau chaude est à 40°C il n'y a aucun risque pour l'usager mais il n'en est pas de même si celle-ci est à 80°C. Dès lors, l'utilisation des robinets mélangeurs actuels est dangereuse si ceux-ci sont installés dans des locaux délivrant une eau à 80°C. On prévoit donc sur le robinet un dispositif permettant, lors de l'installation de celui-ci, d'effectuer un réglage initial en fonction de la température de l'eau chaude de façon à ce que le robinet ne puisse délivrer qu'une eau ayant une température de l'ordre de 40°C.

Le EP-A-2 081 décrit un robinet mélangeur du genre de ceux comportant un boisseau permettant progressivement d'obturer l'une des arrivées d'eau tandis qu'on ouvre l'autre et de ceux dont l'angle de rotation de l'organe de manoeuvre est limité par deux butées portées respectivement par des bagues concentriques. La rotation du boisseau est limitée à 180° par la présence sur le corps du robinet de deux butées diamètralement opposées contre chacune desquelles peut prendre appui un doigt de la tête d'entraînement dudit boisseau.

Dans le DE-B-1 258 688 on a décrit un robinet comportant deux butées dont l'une est réglable par rapport à l'autre de façon à réduire l'angle de rotation de la tête de manoeuvre.

Dans le FR-A-2 269 666 on a décrit un dispositif comportant deux bagues concentriques présentant chacune une butée. Les deux bagues sont imbriquées l'une dans l'autre de façon à ce que les deux butées soient situées sur la même circonférence et chacune des bagues peut être immobilisée sur le corps par un dispositif à moletage.

Selon l'invention la bague intérieure, portant une des butées est immobilisée et positionnée par rapport au corps tandis que la bague extérieure portant l'autre des butées peut pivoter totalement et de façon continue autour de la bague intérieure, les deux butées étant formées par des extensions axiales et la bague extérieure peut être immobilisée sur la bague intérieure par l'entremise d'un écrou vissé sur le corps en emprisonnant entre lui et ledit corps des collerettes portées respectivement par lesdites bagues.

D'autres caractéristiques apparaîtront mieux par la description qui va suivre faite en se référant aux dessins annexés à titre d'exemple indicatif seulement, sur lesquels:

la figure 1 est une vue en coupe d'un robinet mélangeur, conforme à l'invention, pourvu d'un dispositif de temporisation, ledit robinet étant représenté en position de fermeture;

la figure 2 est une vue en coupe effectuée selon la ligne II-II de la figure 1, la coupe étant limitée au corps du robinet;

la figure 3 est une vue analogue à la figure 1, le robinet étant représenté en position d'ouverture;

la figure 4 est une vue en coupe effectuée selon la ligne IV-IV de la figure 1;

la figure 5 est une vue partielle, en perspective éclatée, montrant plus particulièrement le dispositif de réglage limitant la rotation du boisseau.

En se reportant aux dessins, on voit que le robinet se compose d'un corps 1 se présentant sous la forme d'un boîtier cylindrique, facilement usinable, obturé à une extrémité et ouvert à l'autre.

Le corps 1 présente deux embouts 2 et 3, diamètralement opposés, d'arrivée, respectivement de l'eau chaude et de l'eau froide, et un embout 4 de sortie de l'eau mélangée.

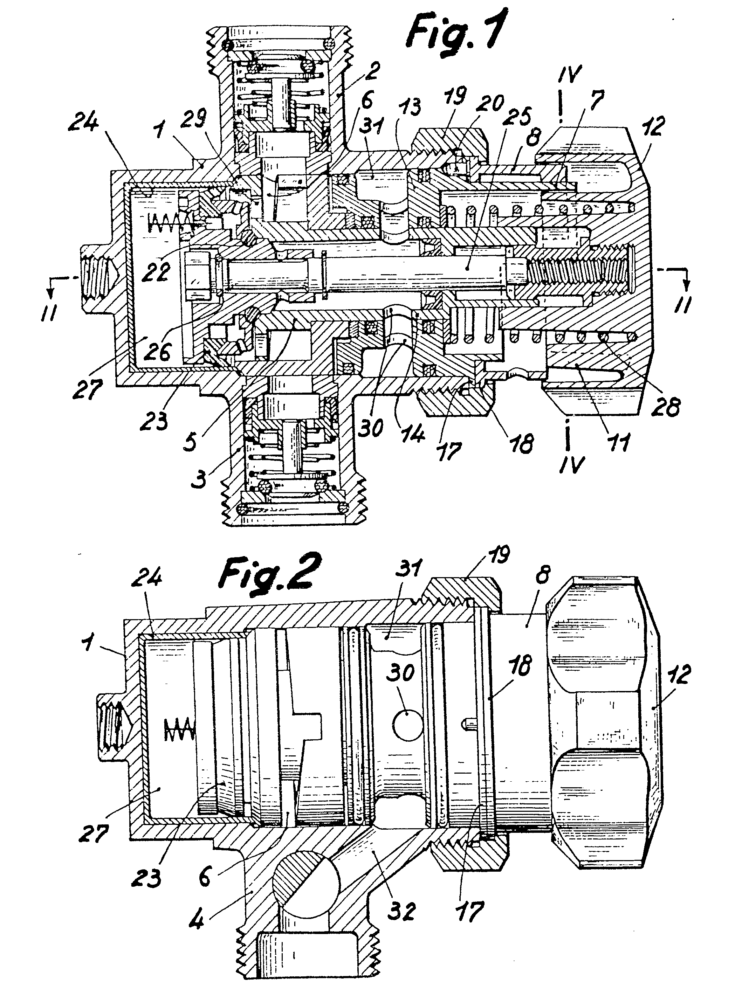

Les deux embouts 2 et 3 débouchent dans le corps 1 dans lequel est logé et peut tourner un boisseau cylindrique 5 présentant une lumière 6 dont la largeur varie d'une extrémité à l'autre. Comme montré sur les figures 1 et 3 on voit qu'il est possible par une rotation de 180° du boisseau 5 d'obturer l'une ou l'autre des arrivées d'eau.

Le problème posé consiste à réduire par un réglage judicieux l'angle de rotation du boisseau 5 de façon à ne pas démasquer totalement l'arrivée d'eau chaude et qu'en position d'ouverture totale de l'eau chaude, une certaine quantité d'eau froide soit admise afin que la température maximale du mélange ne dépasse pas une température prédéterminée, soit 40°C par exemple.

Selon l'invention, ce résultat est obtenu en utilisant deux bagues concentriques 7 et 8 présentant chacune une butée interposée sur la trajectoire du doigt 11 usuel porté par la tête 12 d'entraînement du boisseau 5. Comme il est montré sur les dessins, les bagues comportent deux butées respectivement 9a-9b et 10a-10b obtenues en fendant l'extrémité de chaque bague selon un plan sensiblement parallèle à son axe et en enlevant la matière située d'un côté du plan de la fente.

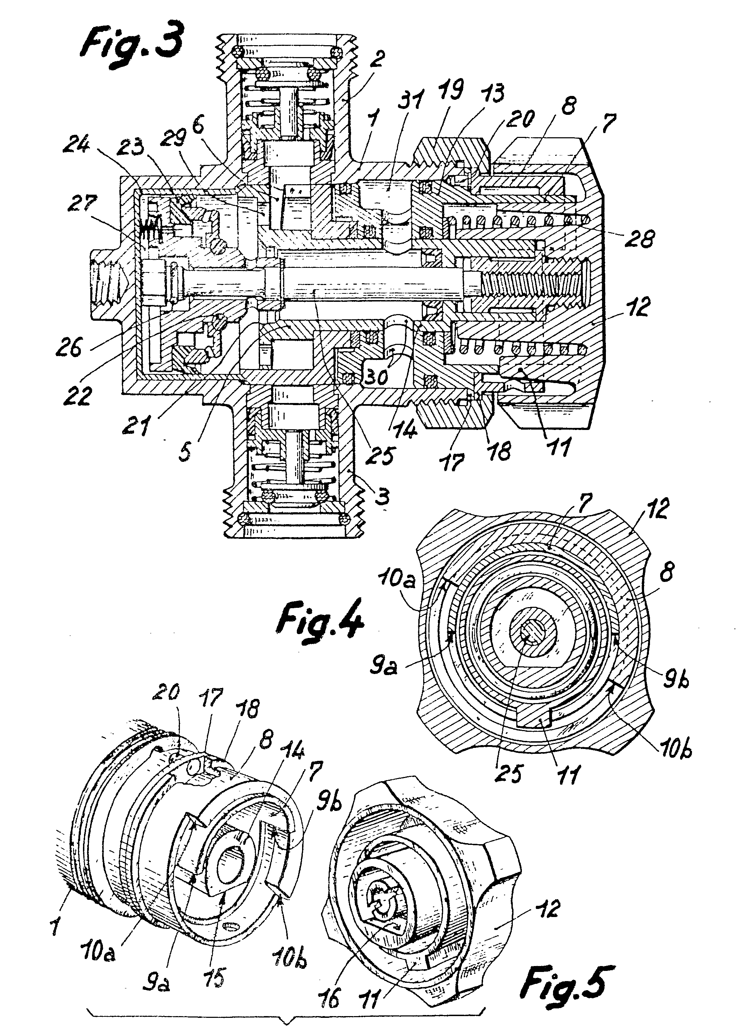

De cette façon, on comprend que par un calage angulaire des deux bagues 7 et 8, il est possible de limiter la rotation de la tête 12 à une valeur inférieure à 180°, celle séparant les butées 9a-10b sur les figures 4 et 5.

Selon un mode de réalisation, la bague 7 forme le prolongement d'un bouchon 13 de guidage de la queue tubulaire 14, du boisseau 5, qui est liée en rotation à la tête 12. A cet effet, l'extrémité de la queue 14 présente une partie méplate 15 coopérant avec une autre partie méplate 16 prévue dans la tête 12.

La bague 7 présente une collerette 17 et celle 8 une collerette 18 permettant, notamment, de bloquer les deux bagues par rapport au corps 1 à l'aide d'un écrou épaulé 19.

Comme il importe que les butées 9a-9b soient positionnées par rapport aux arrivées d'eau, le bouchon 13 présente un ergot 20 pénétrant dans un logement du corps 1.

L'extrémité de la queue tubulaire 14, opposée à la tête 12, forme le siège 21 du robinet et est normalement obturée par un clapet 22 porté par le piston 23

du dispositif de temporisation. Le cylindre de temporisation est constitué par un boîtier 24, doublant le corps 1, dont l'extrémité limite l'enfoncement du boisseau 5 dans ledit corps.

Le piston 23 est lié axialement à une tige 25 traversant la queue 14 et rendue solidaire de la tête 12. La tige 25 porte un clapet auxiliaire 26 permettant d'interrompre la communication entre la chambre de temporisation 27 (formée par le boîtier 24 et le piston 23) et le siège 21 sous l'action du ressort 28 interposé entre le bouchon 13 et la tête 12.

En appuyant sur la tête 12 on provoque le soulèvement du clapet auxiliaire 26 qui facilite l'enfoncement du piston puis le soulèvement du clapet principal 22; l'eau pénétrant dans le boisseau 5 par sa lumière 6 en ressort par des orifices 29 et pénètre dans la queue 14, elle ressort de cette dernière par des orifices 30 pour pénétrer dans une chambre 31, dite de mélange, formée par la paroi interne du corps 1 et une gorge du bouchon 13. La chambre 31 communique avec l'embout 4 de sortie par l'entremise d'un canal 32 (figure 2).

En relâchant la tête 12 on provoque, de la façon connue, le début de la temporisation.

La tête 12 remplit donc une double fonction: elle permet de régler la température du mélange, par sa rotation, et de déclencher l'ouverture du robinet par son déplacement axial.

**Revendications**

1. Robinet mélangeur du genre de ceux comportant un boisseau (5) permettant progressivement d'obturer l'une des arrivées d'eau (2, 3) tandis qu'on ouvre l'autre et de ceux dont l'angle de rotation de l'organe de manoeuvre (12) est limité par deux butées (9a-9b, 10a-10b) portées respectivement par des bagues concentriques (7, 8), caractérisé en ce que la bague (7) intérieure portant une des butées (9a-9b) est immobilisée et positionnée par rapport au corps (1) tandis que la bague (8) extérieure portant l'autre des butées (10a-10b) peut pivoter totalement et de façon continue autour de la bague intérieure (7), les deux butées étant formées par des extensions axiales (9a-9b, 10a-10b) et en ce que la bague extérieure (8) peut être immobilisée sur la bague intérieure par l'entremise d'un écrou (19) vissé sur le corps (1) en emprisonnant entre lui et ledit corps (1) des collerettes (17, 18) portées respectivement par lesdites bagues (7, 8).

2. Robinet mélangeur selon la revendication 1, caractérisé en ce que la bague intérieure (7) fixe forme le prolongement d'un bouchon (13) engagé dans le corps (1) et traversé par une queue tubulaire (14) solidaire du boisseau (5), des moyens étant prévus pour lier en rotation ladite queue et la tête de manoeuvre (12).

3. Robinet mélangeur selon l'une quelconque des revendications 1 et 2, caractérisé en ce que chacune des butées (9a-9b, 10a-10b) est obtenue en fendant chacune des bagues selon un plan longitudinal et en supprimant la matière située d'un côté de la fente ainsi réalisée.

4. Robinet mélangeur selon l'une quelconque des revendications 2 et 3, caractérisé en ce que l'extrémité de la queue tubulaire (14) du boisseau (5), située à l'opposé de la tête de manoeuvre (12), forme le siège (21) du robinet et est normalement obturée par un clapet (22) porté par le piston (23) du dispositif de temporisation qui est relié à ladite tête de manoeuvre par l'entremise d'une tige (25) et d'un clapet (26) auxiliaire porté par ladite tige, ledit clapet auxiliaire étant appliqué contre son siège sous l'action d'un ressort (28) interposé entre le bouchon (13) et ladite tête, cette dernière remplissant donc une double fonction: réglage de la température du mélange, par sa rotation, et déclenchement de l'ouverture du robinet, par son déplacement axial.

5. Robinet mélangeur selon la revendication 4, caractérisé en ce que l'eau, pénétrant dans le boisseau (5), ressort de celui-ci par des trous axiaux (29) prévus dans sa face située vers le piston (23), traverse axialement la queue tubulaire (14) ressort de celle-ci par l'entremise d'orifices (30) débouchant dans une chambre (31) formée par la paroi interne du corps (1) et une gorge prévue dans le bouchon (13), ladite chambre communiquant avec l'embout de sortie de d'eau.

**Patentansprüche**

1. Mischventil mit zeitverzögerter Schliessung mit Küken (5), um nach und nach eine der Wasserzuleitungen (2, 3) zu schliessen, während die andere geöffnet wird, wobei der Drehwinkel des Betätigungsorgans (12) durch zwei, auf konzentrischen Ringen (7, 8) gelagerte Anschläge (9a-9b, 10a-10b) begrenzt ist, dadurch gekennzeichnet, dass der Innenring (7) mit einem der Anschläge (9a-9b) im Verhältnis zum Körper (1) in einer bestimmten Position feststeht, während der Aussenring (8) mit dem anderen Anschlag (10a-10b) sich zur Gänze kontinuierlich um den Innenring (7) drehen kann, da die beiden Anschläge von den Achsverlängerungen (9a-9b, 10a-10b) gebildet werden, und dadurch gekennzeichnet, dass der Aussenring (8) mittels einer Mutter (19), die auf dem Körper (1) aufgeschraubt ist, den Innenring blockieren kann, indem sie die jeweils von den Ringen (7, 8) getragenen Flansche (17, 18) zwischen ihr und dem Körper (1) festklemmt.

2. Mischventil gemäss Anspruch 1, dadurch gekennzeichnet, dass der feststehende Innenring (7) die Verlängerung eines im Körper (1) eingelassenen Stopfens (13) bildet, der von einem, mit dem Küken (5) fest verbundenen Hohlschaft (14) durchquert wird, wobei dieser Schaft und das Betätigungsorgan (12) über entsprechende Teile in Drehverbindung stehen.

3. Mischventil gemäss Anspruch 1 und 2, dadurch gekennzeichnet, dass die beiden Anschläge (9a-9b, 10a-10b) durch Spalten der Ringe in der Längsebene und durch Entfernen des Materials auf der einen Seite des gebildeten Spalts geformt werden.

4. Mischventil gemäss Anspruch 2 und 3, dadurch gekennzeichnet, dass das Ende des Hohlschaftes (14) des Kükens (5) gegenüber dem Betätigungsorgan (12) den Ventilsitz (21) bildet und normalerweise durch eine Klappe (22) verschlossen ist, die am Kolben (23) der Zeitverzögerungsvorrichtung angebracht ist, welche über eine Spindel (25) und eine Hilfsklappe (26) mit dem Betätigungsorgan verbunden ist, wobei die Hilfsklappe unter der Einwirkung einer Feder (28) zwischen Stopfen (13) und Betätigungsorgan gegen ihren Sitz gedrückt wird, letzteres erfüllt daher eine doppelte Funktion: durch die Drehung Regelung der Mischtemperatur und durch die Axialverschiebung Auslösen der Ventilöffnung.

5. Mischventil gemäss Anspruch 4, dadurch gekennzeichnet, dass das, in das Küken (5) eintretende Wasser durch axial angebrachte Löcher (29) auf der zum Kolben (23) gelegenen Seite aus diesem wieder austritt, den Hohlschaft (14) durchläuft und aus Öffnungen (30) in eine, von der Innenwand des Körpers (1) und einer Nut im Stopfen (13) gebildete Kammer fliesst, die mit dem Wasserauslauf in Verbindung steht.

## Claims

1. Mixing valve with time delayed closing of the type which has a cock-shell (5) allowing progressive closing of one of the water lead-ins (2, 3) whilst the other one is opened, and of which the angle of rotation of the operating element (12) is limited by two thrust bearings (9a-9b, 10a-10b) borne respectively by concentric rings (7, 8) characterised by the fact that the inner ring (7), which bears one of the thrust bearings (9a-9b) is immobilised and positioned in relation to the body (1) whilst the outer ring (8) which bears the other thrust bearing (10a-10b) can pivot totally and continuously around the inner ring (7), the two thrust bearings being formed by the axial extensions (9a-9b, 10a-10b), and by the fact that the outer ring (8) can be immobilised on the inner ring by means of a nut (19) screwed to the body (1) enclosing between it and the body in question (1) clamps (17, 18) which bear respectively on the rings in question (7, 8).

2. Mixing valve in accordance with claim 1, characterised by the fact that the inner ring (7), fixed, forms the extension of a plug (13) engaged in the body (1) and traversed by a tubular tail (14) solidary to the cock-shell (5), means being provided for connecting this tail and the operating head (12) in rotation.

3. Mixing valve in accordance with either one of claims 1 and 2, characterised by the fact that each of the thrust-bearings (9a-9b, 10a-10b) is obtained by splitting each of the rings along a longitudinal plane and by eliminating the matter located on one side of the slit thus made.

4. Mixing valve in accordance with either one of claims 2 and 3, characterised by the fact that the end of the tubular tail (14) of the cock-shell (5) located opposite the operating head (12) forms the seat (21) of the valve and is normally plugged by a gate (22) borne by the piston (23) of the time-delay device which is connetcted to the said operating head by means of a rod (25) and an auxiliary valve (26) borne by the said rod, the said auxiliary valve being applied against its seat under the action of a spring (28) placed between the plug (13) and the said head, which means that the latter fills two functions: adjustment of the mixing time-delay, through its rotation, and triggering of the valve opening through its axial displacement.

5. Mixing valve in accordance with claim 4, characterised by the fact that the water, on penetrating the cock-shell (5), is output from the latter by the axial holes (29) in its surface located towards the piston (23), axially traverses the the tubular tail (14) and is output from the latter through orifices (30) leading into a chamber (31) formed by the inner wall of the body (1) and a groove in the plug (13), which chamber communicates with the water outlet end-piece.

Fig.1

Fig.2

0 021 957

Fig.3

Fig.4

Fig.5

7